# EUROPEAN PATENT APPLICATION

(11) **EP 3 590 842 A1**
(43) Date of publication of application: **08.01.2020**
(21) Application number: 18382490.3
(22) Date of filing: 02.07.2018
(51) Int. Cl.: B64D 15/12, B64D 15/00

(54) **DE-ICING SYSTEM FOR CRITICAL SURFACES OF AIRCRAFT**

(71) Applicant: Airbus Operations, S.L., 28906 Getafe (ES)
(72) Inventor: DE BROUWER, Gabrielle, 28906 Madrid (ES)

(57) **Abstract**

The invention is relative to a de-icing system (**10**) for critical surfaces (**21, 22, 23, 24, 25, 26**) of aircraft (**20**), comprising:
- at least one infrared laser generator (**30**), able to emit a laser beam (**40**) having a predetermined wavelength **λ**,
- a set of embedded networks (**50**) of optical fiber wires (**60**), each optical fiber wire (**60**) comprising an input (**61**) connected to the laser generator (**30**) and, at least, an output (**62**) configured to be able to spread the laser beam (**40**) from the laser generator (**30**),
- wherein each output (**62**) of the optical fiber wire (**60**) is able to spread the laser beam (**40**) through one of a set of orifices (**70**) previously drilled onto a leading edge (**21**) of wings (**22**), and/or onto the leading edge (**21**) of horizontal tail plane (**23**), and/or onto the leading edge of the vertical tail plane (**24**) configured to be able to melt and remove ice or snow accretion **(80)** on critical surfaces (**21, 22, 23, 24, 25, 26**) of the aircraft (**20**) during the flight.

## Description

### FIELD OF THE INVENTION

The present invention relates to a de-icing system for critical surfaces of aircraft. More particularly, the system of the invention thereby allows to melt ice or snow accretion on critical surfaces of aircraft such as wings, horizontal tail plane, vertical tail plane during the flight in case of cold weather.

### BACKGROUND

In commercial or military aircrafts, ice formation on aircraft surfaces, and particularly on wing surface and control surfaces, during flights in cold weather is a problem that can have catastrophic consequences. Indeed, accumulation of ice increases aircraft weight and can reduce lift and interfere with the functioning of moving parts.

Nowadays, it exists a large number of solutions in order to prevent ice formation or de-icing systems to remove accumulated ice on aircraft surfaces while an aircraft is in flight. Among these solutions, there are for example, de-icing devices in order to remove ice by scraping or cracking and devices allowing to melt the ice by microwave heating. These solutions are typically slow and inefficient. They must also be positioned in or adjacent to the area to be de-iced, which leads to a greater design and assembly complexity. Other systems propose for example, a pneumatic system able to change the volume of the structure locally in order to breaks the ice accretion or a hydrophobic treatment applied on the surface of the Aircraft which could have the risk to be covered by ice. This first solution seems to be heavy and complex to install on the critical surfaces, the second solution mentioned above is temporal and needs to be monitored regularly to prevent potential accretion of ice. Another solution was disclosed in the document US6206325 relative to a laser beam generator positioned on an aircraft, able to generate a beam of radiant energy directed toward critical surfaces of said aircraft to create a footprint upon its surface. In this concept, the laser beam is manipulated so that the footprint is moved along the aircraft surface for removing ice or snow from critical aircraft surfaces. This solutions is operationally very complex to apply on current aircraft because firstly it implies to manage mechanical movable modules and/or mirror systems, and secondly because these movable modules and mirror systems would be sensitive to the vibration of the aircraft during the flight.

Therefore a need exists in order to have a reliable solution to remove on request the accretion of ice or snow on critical surfaces of aircraft reducing the complexity and inefficiency of current systems.

### SUMMARY OF THE INVENTION

In order to solve the drawbacks stated above, the present invention proposes a de-icing system for critical surfaces of an aircraft, according to a set of claims, comprising:
- at least one infrared laser generator, able to emit a laser beam having a predetermined wavelength **λ**,
- a set of embedded networks of optical fiber wires, each optical fiber wire comprising an input connected to the laser generator and, at least one output configured to be able to spread the laser beam from the laser generator,
- wherein each output of the optical fiber wire is able to spread the laser beam through one of a set of orifices previously drilled onto a leading edge of wings, and/or onto the leading edge of horizontal tail plane, and/or onto the leading edge of the vertical tail plane configured to be able to melt and remove ice or snow accretion on critical surfaces of the aircraft during a flight.

According to the invention, the laser generator used is an Erbium Yag laser;

According to the invention, the predetermined wavelength **λ** of the laser beam is 2,94 µm.

According to the invention, the infrared laser generator generates a continuous beam.

According to the invention, the infrared laser generator generates a pulse beam.

According to the invention, the de-icing system comprises also a set of orifices previously drilled onto the wings, and/or onto the horizontal tail plane, and/or onto the vertical tail plane, and/or the control surfaces such as the laser beam goes through said orifices via an extension of the set of the embedded networks of optical fiber wires in order to melt and remove ice or snow accretion.

According to the invention, the orifice through which the output of the optical fiber wire is able to spread the laser beam has a radius smaller than the radius of the laser beam.

According to the invention, a laser wire™ is connected from an output of an optical fiber wire to another output of an optical fiber wire.

According to the invention, the optical fiber is partially embedded in at least one composite structure formed by a plurality of layers.

### BRIEF DESCRIPTION OF THE DRAWINGS

To complete the description and in order to provide a better understanding of the invention, a set of drawings is provided. Said drawings form an integral part of the description and illustrate preferred embodiments of the invention. The drawings comprise the following figures:
- Figure 1, is a schematic representation of an aircraft comprising the de-icing system according to the invention;
- Figure 2, is a schematic representation of the de-icing system according to the invention.

### DETAILED DESCRIPTION OF THE INVENTION

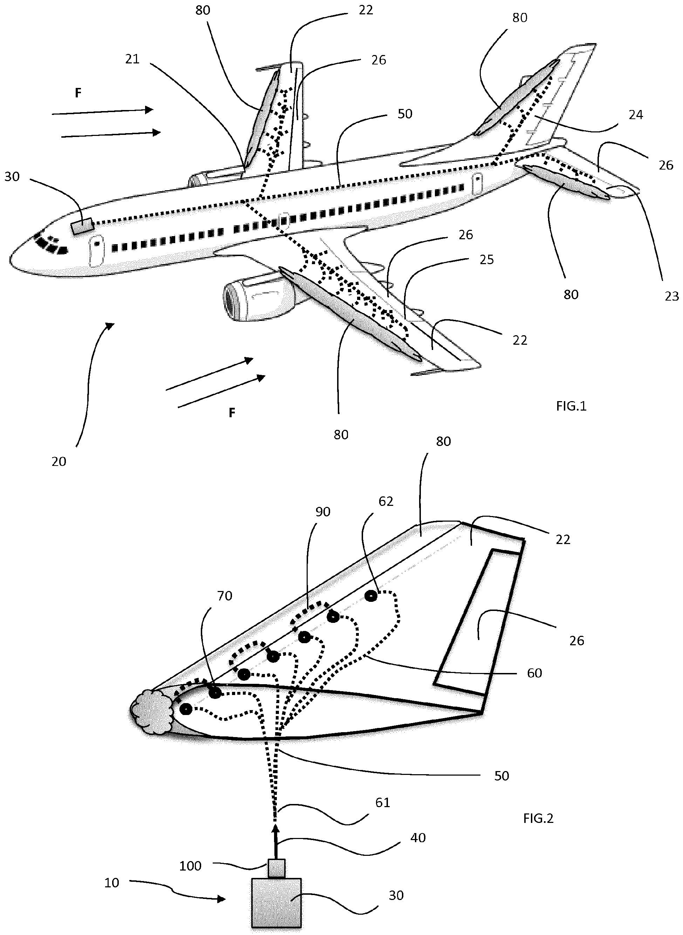

The present invention is directed generally towards a de-icing system for aircraft. A person skilled in the relevant art will understand, however, that the invention may have additional embodiments, and that the invention may be practiced without several of the details of the embodiments described below with reference to figures 1-2.

Indeed, the present invention seems to be a disruptive solution in order to remove ice and/or snow accretion **80** onto critical surfaces **21, 22, 23, 24, 25, 26** of an aircraft **20.**

According to the invention, the aircraft **20** comprises a de-icing system **10,** said de-icing system **10,** comprising at least one infrared laser generator **30.** This infrared laser generator **30** is able to emit or generate a laser beam **40** having a predetermined wavelength **λ** in a set of embedded networks **50** of optical fiber wires **60.** Indeed, each optical fiber wire **60** comprises respectively an input **61** connected to the laser generator **30** and at least one output **62** configured to be able to spread the laser beam **40** from the laser generator **30.**

According to a preferred embodiment of the invention, each output **62** of the optical fiber wires **60** is able to spread the laser beam **40** through a set of orifices **70** previously drilled onto a leading edge **21** of wings **22,** and/or onto the leading edge **21** of horizontal tail plane **23,** and/or onto the leading edge of the vertical tail plane **24.** The radius of the set of orifices **70** drilled is one of the key point of the invention, because the smaller the radius of such orifices **70** is than the radius of the laser beam **40,** the bigger the radius of the diffracted laser beam **40** is. Such a diffraction of the laser beam **40** improves the efficiency and the rapidity of the de-icing system **10.**

Therefore, through the set of orifices **70,** the laser beam **40** is configured to be able to melt and remove ice or snow accretion **80** onto critical surfaces **21, 22, 23, 24, 25, 26** of the aircraft **20.** Indeed, the alone presence of the networks **50** of optical fibers **60,** in order to spread the laser beam **40** through the set of orifices **70** onto the leading edges **21,** is clearly widely sufficient in order to remove all the ice and snow accretion **80,** because, as is well known, the ice and snow accretion **80** begin to appear on the leading edge **21** during the flight. Therefore, when the ice and/or snow accretion **80** disappears on the areas close to the leading edge **21,** the potential ice or snow residues are automatically removed from the surfaces **22, 23, 24, 25, 26** due to the power of the airflow **F** during the flight of the aircraft **20.**

According to a preferred embodiment of the invention, the laser generator **30** of the de-icing system **10** is able to generate an Erbium Yag laser beam **40.** One and not the least advantage of the use of an Erbium Yag (Er:YAG) laser, and particularly with a predetermined wavelength **λ** around 2,94 µm, is that the laser beam **40** is able to be strongly absorbed by water or H2O molecules leading to the vaporization of said water without increasing the temperature of the structure close to the zone where the ice is built up. This specific feature of the laser Er:YAG with respect to the others kind of laser allows the acceleration of the de-icing process.

In an embodiment, the laser generator **30** is able to generate a continuous laser beam **40.** This continuous laser beam **40** is able to fight efficiently the ice or snow accretion **80.**

In another embodiment, the laser generator **30** is able to generate a pulse laser beam **40.** The pulse laser beam **40** allows the use of more compact solution for the laser generator **30** and, moreover, it allows to reduce the laser consumption of energy. The selection of the continuous or pulse laser beam **40** mode depends on the speed (with regard to the dissipated power of the laser beam **40**) at which we want to melt the ice **80** and of the quantity of ice **80** is needed to melt.

According to an embodiment of the invention, the de-icing system **10** comprises also a set of orifices **70** previously drilled onto the wings **22,** and/or onto the horizontal tail plane **23,** and/or onto the vertical tail plane **24,** such as the laser beam **40** is able to go through said orifices **70** via an extension of the set of the embedded networks **50** of optical fiber wires **60,** in order to melt and remove ice or snow accretion **80.**

By "wings **22",** "horizontal tail plane **23"** or "vertical tail plane **24",** we consider in the description as evident that all these essential and critical parts of the aircraft comprise respectively in an non-exhaustive list a leading edge **21,** an upper cover of the wings **22,** or an upper cover of the horizontal tail plane **23,** or left and right covers of a central box of the vertical tail planes **24,** or a trailing edge **25,** and at least one control surface **26.**

According to another embodiment, the output **62** of each optical fiber **60** is fitted to be able to be connected to a Laser Wire™ **90** configured in such a manner that one Laser Wire™ **90** is able to link two different outputs **62.** The presence of the Laser Wire™ allows to bright the laser beam **40** outside on full-length of the wire in order to increase the ice and snow melting with less power consumption.

According to an embodiment the optical fiber **60** is partially embedded in at least one composite structure formed by a plurality of layers. That allows a considerable advantage in order to extend easily the networks **50** of optical fiber wires **60** in the different parts of the aircraft **20** without being invasive for said aircraft **20.**

According to another embodiment the de-icing system comprises a second infrared laser generator (no referenced) able to generate a laser beam **40** having a predetermined wavelength **λ** when a failure occurs in the main infrared laser generator. That allows to improve the reliability of the de-icing system without adding design and assembly complexity to the system.

According to another embodiment the laser generator comprises a detection module **100** able to detect the ice when it is building up in the leading edge of the critical surface. That allows to generate the laser beam only if there is some ice to melt, reducing the energy consumption. Additionally, it allows to remove other detection systems which are not so reliable and increase the weight and the assembly complexity of the overall system.

From the foregoing, it will be appreciated that specific embodiments of the invention have been described herein for purposes of illustration, but that various modifications may be made without deviating from the scope of the invention. For example, aspects of the invention described in the context of particular embodiments may be combined or eliminated in other embodiments. Although advantages associated with certain embodiments of the invention have been described in the context of those embodiments, other embodiments may also exhibit such advantages. Additionally, none of the foregoing embodiments need necessarily to exhibit such advantages to fall within the scope of the invention. Accordingly, the invention is not limited except as by the appended claims.

## Claims

1. De-icing system (**10**) for critical surfaces (**21, 22, 23, 24, 25, 26**) of aircraft (**20**), comprising:
- at least one infrared laser generator (**30**), able to emit a laser beam (**40**) having a predetermined wavelength **λ**,
- a set of embedded networks (**50**) of optical fiber wires (**60**), each optical fiber wire (**60**) comprising an input (**61**) connected to the laser generator (**30**) and, at least, an output (**62**) configured to be able to spread the laser beam (**40**) from the laser generator (**30**),
- wherein each output (**62**) of the optical fiber wire (**60**) is able to spread the laser beam (**40**) through one of a set of orifices (**70**) previously drilled onto a leading edge (**21**) of wings (**22**), and/or onto the leading edge (**21**) of horizontal tail plane (**23**), and/or onto the leading edge of the vertical tail plane (**24**) configured to be able to melt and remove ice or snow accretion (**80**) on critical surfaces (**21, 22, 23, 24, 25, 26**) of the aircraft (**20**) during the flight.

2. De-icing system (**10**) for critical surfaces (**21, 22, 23, 24, 25, 26**) of aircraft (**20**) according to claim 1, wherein the generator (**30**) is an Erbium Yag laser;

3. De-icing system (**10**) for critical surfaces (**21, 22, 23, 24, 25, 26**) of aircraft (**20**) according to claim 1 or 2, wherein the predetermined wavelength **λ** of the laser beam (**40**) is 2,94 µm.

4. De-icing system (**10**) for critical surfaces (**21, 22, 23, 24, 25, 26**) of aircraft (**20**) according to claims 1 to 3, wherein the infrared laser generator (**30**) generates a continuous beam (**40**).

5. De-icing system (**10**) for critical surfaces (**21, 22, 23, 24, 25, 26**) of aircraft (**20**) according to claims 1 to 3, wherein the infrared laser generator (**30**) generates a pulse beam (**40**).

6. De-icing system (**10**) for critical surfaces (**21, 22, 23, 24, 25, 26**) of aircraft (**20**) according to claims 1 to 5, comprises also a set of orifices (**70**) previously drilled onto the wings (**22**), and/or onto the horizontal tail plane (**23**), and/or onto the vertical tail plane (**24**), and/or the control surfaces (**26**) such as the laser beam (**40**) is able to go through said orifices (**70**) via an extension of the set of the embedded networks (**50**) of optical fiber wires (**60**) in order to melt and remove ice or snow accretion (**80**).

7. De-icing system (**10**) for critical surfaces (**21, 22, 23, 24, 25, 26**) of aircraft (**20**) according to claim 1 to 6, wherein the orifice (**70**) through which the output of the optical fiber wire is able to spread the laser beam (**40**) has a radius smaller than the radius of the laser beam (**40**).

8. De-icing system (**10**) for critical surfaces (**21, 22, 23, 24, 25, 26**) of aircraft (**20**) according to claims 1 to 7, wherein a laser wire™ (**90**) is connected from an output of the optical fiber wire (**62**) to another output (**62**).

9. De-icing system (**10**) for critical surfaces (**21, 22, 23, 24, 25, 26**) of aircraft (**20**) according to claims 1 to 8, wherein the optical fiber wire (**60**) is partially embedded in at least one composite structure formed by a plurality of layers.
